# EUROPÄISCHE PATENTANMELDUNG

(11) **EP 1 509 027 A1**
(43) Veröffentlichungstag der Anmeldung: **23.02.2005**
(21) Anmeldenummer: 03018666.2
(22) Anmeldetag: 21.08.2003
(51) Int. Cl.: H04M 1/23, H04M 1/02, H04M 1/725, G06F 3/033, G06F 1/16

(54) **Tragbares Kommunkationsgerät mit einem Touch-Pad an der Seitenwand zur Bedienung mit nur einer Hand**

(71) Anmelder: Kiesewetter, Tobias, 85221 Dachau (DE)
(72) Erfinder: Kiesewetter, Tobias, 85221 Dachau (DE)
(74) Vertreter: Banzer, Hans-Jörg, Dipl.-Ing.

(57) **Zusammenfassung**

Ein Mobilgerät, z. B. ein Mobiltelefon (1) oder ein PDA-Organizer, umfasst ein Touchpad (2), welches vorzugsweise mit einem Daumen bedient wird, und Eingabemittel (4), mit welchen u. a. eine Funktionsweise des Touchpads (2), z. B. Eingabe von Ziffern oder Eingabe von Buchstaben über das Touchpad (2), ausgewählt wird. Das Touchpad (2) und die Eingabemittel (4), mit deren Hilfe die Eingabe von Informationen, z. B. alphanumerischer Zeichen, erfolgt, sind vorzugsweise auf gegenüberliegenden Seiten (7, 8) des Mobilgeräts (1) angeordnet. Dadurch kann das Mobilgerät (1) mit einer Hand bedient werden und einer Anzeigeeinheit, z. B. einem Display (3), steht nahezu die gesamte Vorderseite (6) zur Verfügung.

## Beschreibung

Die vorliegende Erfindung betrifft ein lediglich mit einer Hand bedienbares Mobilgerät, welches derart ausgestaltet ist, dass eine Informationseingabe vorzugsweise über eine zeichnende Bewegung eines Fingers, insbesondere eines Daumens, erfolgt. Dabei kann das Mobilgerät z. B. ein Mobiltelefon, ein Web Pad oder ein PDA-Organizer sein.

Bei den heutigen Mobilgeräten, z.B. Mobiltelefonen, erfolgt eine Informationseingabe, z. B. die Eingabe alphanumerischer Zeichen, häufig, indem das Mobilgerät in der einen Hand gehalten wird, während die Informationseingabe mit der anderen Hand vorgenommen wird. Das bedeutet, dass zur Informationseingabe beide Hände verfügbar sein müssen.

Des Weiteren sind die Eingabemittel, z. B. ein Tastenfeld, bei den heutigen Mobilgeräten meist auf der Vorderseite des Mobilgerätes angeordnet, dort wo häufig auch ein Display vorhanden ist. Dadurch ist die Größe des Displays auf die Größe der Vorderseite abzüglich der Größe der Eingabemittel beschränkt.

Die DE 100 36 421 A1 offenbart ein Verfahren zur einhändigen, ergonomischen Eingabe von Text und Zeichen in ein Mobilgerät. Dabei erfolgt dieser Eingabe mit einem Scrollrad, mit dem eine Spalte eines Zeichensatzes ausgewählt wird, wobei über seitliche Tasten eine jeweilige Zeile des Zeichensatzes zugeordnet wird.

Der Nachteil dieses Verfahrens besteht zum einen darin, dass der Zeichensatz vordefiniert und damit beschränkt ist. Zum anderen muss man zur Eingabe eines Zeichens wissen, wo dieses Zeichen in dem Zeichensatz vorhanden ist, was umso nachteiliger ist, je umfangreicher der Zeichensatz ist. Insgesamt ist diese Art der Zeicheneingabe somit relativ aufwändig.

Die WO 03/009119 A1 offenbart ein Gerät, welches ein portables Telefon oder ein kleiner PDA-Apparat ist und mit den Fingern derselben Hand bedient werden kann, mit welcher das Gerät gehalten wird. Dabei erfolgt die Eingabe von Zeichen über vier oder mehr Tasten, welche im Allgemeinen auf der linken Seite des Gerätes vorhanden sind, und drei oder mehr Tasten und einen Joystick, welche im Allgemeinen auf der rechten Seite des Gerätes angeordnet sind.

Der Nachteil dieses Gerätes besteht zum einen in der nicht intuitiven Eingabe, welche eine Einarbeitungszeit erfordert, die von der Größe des zu verwendenden Zeichensatzes abhängt. Des Weiteren ragt der Joystick, welcher der mechanisch anspruchsvollste Teil des Gerätes ist, zwangsläufig heraus, wodurch es leicht zu Beschädigungen des Joysticks kommen kann.

Die EP 0 969 644 A1 offenbart ein Fingerabdruckerkennungssystem für Mobiltelefons, wobei die verschiedenen Finger einer Bedienperson anhand ihrer Fingerabdrücke erkannt werden. Dabei ist jedem Fingerabdruck (jedem Finger) eine bestimmte Funktion zugeordnet, wobei diese Zuordnung mittels einer Tasteneingabe verändert werden kann.

Da zur Eingabe die Finger auf das Erkennungssystem, welches an einer bestimmten Stelle des Mobiltelefons angebracht ist, gelegt werden müssen, ist eine Bedienung mit nur einer Hand sehr schwierig. Des Weiteren ist die Bedienung nicht intuitiv, da es keine bekannte natürliche Zuordnung von Funktionen zu einem Finger gibt.

Der Erfindung liegt daher die Aufgabe zugrunde, ein Mobilgerät bereitzustellen, welches mit derselben Hand gehalten und bedient werden kann, bei dem die Informationseingabe intuitiv ist und welches ohne leicht zu beschädigendes Teil konstruiert werden kann.

Diese Aufgabe wird erfindungsgemäß durch ein Mobilgerät gemäß Anspruch 1 gelöst. Die abhängigen Ansprüche definieren bevorzugte und vorteilhafte Ausführungen der Erfindung.

Im Rahmen der vorliegenden Erfindung umfasst das Mobilgerät ein Gehäuse, eine in dem Gehäuse ausgebildete Anzeigeeinheit und ein Touchpad zur einfachen Eingabe von Informationen mit Hilfe eines Fingers einer Hand einer Bedienperson, wobei die Bedienperson das Mobilgerät mit derselben Hand hält. Dabei kann das Touchpad erfindungsgemäß ein Daumen-Touchpad sein, welches auf einer Seite des Mobilgerätes angeordnet sein kann, so dass es mit dem Daumen einer Hand, mit welcher die Bedienperson das Mobilgerät hält, einfach zu bedienen ist. Da der Daumen aus anatomischen Gründen auch dann noch relativ beweglich ist, wenn die Hand, zu der der Daumen gehört, das Mobilgerät hält, ist die vorab erwähnte Anordnung des Touchpads besonders vorteilhaft.

Zusätzlich können auf einer derjenigen Seite, auf der das Touchpad angeordnet ist, gegenüberliegenden Seite des Mobilgerätes erfindungsgemäß Eingabemittel, z. B. Tasten, derart vorhanden sein, dass sie mit den Fingern derselben Hand, mit der das Mobilgerät gehalten wird, einfach zu erreichen und zu bedienen sind. Die Eingabemittel können derart ausgestaltet sein, dass mit ihnen vorteilhafter Weise eine Funktionsweise des Touchpads ausgewählt werden kann. Dabei kann z. B. zwischen einer Funktionsweise zur Eingabe von Ziffern über das Touchpad, einer Funktionsweise zur Eingabe von Buchstaben über das Touchpad, einer Funktionsweise zur Eingabe von Sonderzeichen über das Touchpad, einer Funktionsweise zur Eingabe von Freihandzeichnungen über das Touchpad und einer Funktionsweise zum Ausführen einer Computermaus-ähnlichen Steuerungsfunktion über das Touchpad gewählt werden.

Des Weiteren kann die Anzeigeeinheit erfindungsgemäß über eine gesamte Vorderseite des Mobilgerätes angeordnet sein. Da die Informationseingabe, z. B. von alphanumerischen Zeichen, über ein Zusammenspiel des Touchpads mit den Eingabemitteln erfolgt, welche seitlich an das Mobilgerät angeordnet sein können, steht die gesamte Vorderseite des Mobilgerätes für eine Anzeigeeinheit, z. B. ein Display, zur Verfügung. Dadurch kann das erfindungsgemäße Mobilgerät eine zum Vergleich mit dem Stand der Technik wesentlich größere Anzeigeeinheit besitzen.

Die vorliegende Erfindung eignet sich vorzugsweise zum Einsatz bei einem Mobiltelefon, einem Web Pad oder einem PDA-Organizer. Selbstverständlich ist die Erfindung jedoch nicht auf diesen Anwendungsbereich beschränkt.

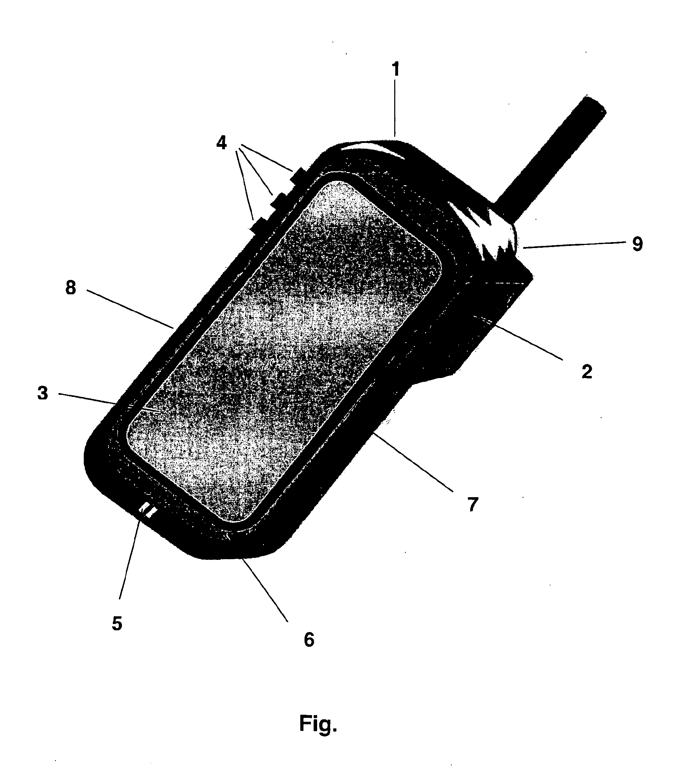

Die vorliegende Erfindung wird nachfolgend näher unter Bezugnahme auf die beigefügte Zeichnung anhand bevorzugter Ausführungsbeispiele erläutert.

Die einzige Figur zeigt ein Mobiltelefon mit Daumen-Touchpad, Funktionstasten und einem Display gemäß einem bevorzugten Ausführungsbeispiel der Erfindung.

In der Figur ist ein Mobiltelefon 1 beispielhaft dargestellt. Dabei umfasst das Gehäuse des Mobiltelefons 1 eine Vorderseite 6, eine rechte Seite 7, eine linke Seite 8 und eine Rückseite 9. Auf der rechten Seite 7 des Mobiltelefons 1 ist ein Daumen-Touchpad 2 derart angeordnet, dass es mit der Fingerkuppe des Daumens der rechten Hand einer Bedienperson, mit welcher die Bedienperson das Mobiltelefon 1 hält, um die Vorderseite 6 zu betrachten, einfach zu bedienen ist, wenn die Handfläche der Bedienperson dabei einen Teil der Rückseite 9 umschließt. Ein Display 3 befindet sich zusammen mit einer Sprechmuschel 5, welche unterhalb des Displays angeordnet ist, auf der Vorderseite 6 des Mobiltelefons 1. Auf der linken Seite 8 sind derart Funktionstasten 4 ausgebildet, dass sie mit einer Fingerkuppe eines Fingers der Hand der Bedienperson, mit welcher die Bedienperson das Mobiltelefon 1 hält, um das Display 3 zu betrachten, einfach zu bedienen sind.

Obwohl das Touchpad 2 in der Figur auf der rechten Seite 7 abgebildet ist, kann es im Allgemeinen an einer beliebigen Stelle auf einer beliebigen Seite eines Mobilgerätes 1 angeordnet sein. Dabei können über das Touchpad 2 mit Hilfe eines beliebigen Fingers Informationen, z. B. alphanumerische Zeichen, Freihandzeichnungen, in das Mobilgerät 1 eingegeben werden. Wenn das Touchpad, wie in der Figur dargestellt, ein Daumen-Touchpad 2 ist, ist das Mobiltelefon 1 derart ausgestaltet, dass das Daumen-Touchpad 2 besonders gut mit dem Daumen der das Mobiltelefon haltenden Hand zu bedienen ist und entsprechend über dieses Daumen-Touchpad mit Hilfe des Daumens Informationen eingegeben werden können. In diesem Fall kann das Daumen-Touchpad 2 auf einer Seite 7, 8 des Mobiltelefons 1 angeordnet sein, wobei Rechtshänder die rechte Seite 7 und Linkshänder die linke Seite 8 bevorzugen.

Da zur Informationseingabe das Touchpad 2 ausreicht, werden keine weiteren Eingabemittel, z. B. ein Tastenfeld, benötigt, wodurch für die Anzeige, welche im Allgemeinen auf der Vorderseite angeordnet ist, im Wesentlichen die gesamte Vorderseite 6 zur Verfügung steht. Eine Ausnahme bildet lediglich der Abschnitt mit der Sprechmuschel 5, welche zur Erfassung von akustischen Signalen, insbesondere Sprachsignalen, vorgesehen ist und ebenfalls auf der Vorderseite 6 angeordnet sein kann.

Um die Eingabe von Informationen in das Mobilgerät 1 weiter zu vereinfachen, sind die Funktionstasten 4 als zusätzliche Eingabemittel vorhanden, wobei die Funktionstasten 4 derart ausgestaltet und angeordnet sind, dass sie mit einem Finger, z. B. vorzugsweise mit dem Zeigefinger, der das Mobilgerät 1 haltenden Hand einfach zu erreichen und zu bedienen sind. Im Allgemeinen können diese Eingabemittel an einer beliebigen Stelle auf einer beliebigen Seite des Mobilgerätes 1 angeordnet sein. Dabei kann das Mobilgerät 1 derart ausgestaltet sein, dass mit Hilfe der Funktionstasten 4 eine von verschiedenen Funktionsweisen des Touchpads, eingestellt werden können. Dabei kann z. B. zwischen folgenden Funktionsweisen des Touchpads unterschieden werden:
- Eingabe von Ziffern
- Eingabe von Buchstaben
- Eingabe von Sonderzeichen, wie z.B. "+", "-", "_", "@"
- Eingabe von Freihandzeichnungen
- Ausführen einer Computermaus-ähnlichen Steuerungsfunktion

Wenn also z. B. die Funktionsweise "Eingabe von Ziffern" über die Funktionstasten 4 ausgewählt ist, wertet das Mobilgerät eine über das Touchpad 2 erfasste Eingabe nur nach Ziffern aus. Auf Grund der Einschränkung der Treffermenge auf Ziffern ist nun eine fehlerhafte Auswertung der Eingabe von Ziffern über das Touchpad 2 durch das Mobilgerät 1 unwahrscheinlicher als ohne eine Einschränkung der Treffermenge. Somit kann z.B. zuverlässig die Ziffer "0" von dem Buchstaben "O" unterschieden werden.

Bei der Funktionsweise "Eingabe von Freihandzeichnungen" kann das Mobilgerät 1 die über das Touchpad 2 eingegebene Zeichnung nahezu ungefiltert übernehmen und in einem möglichst Speicher schonenden Format abspeichern. Bei der Funktionsweise "Ausführen einer Computermaus-ähnlichen Steuerungsfunktion" kann z. B. durch die Bewegung des Fingers auf dem Touchpad ein in der Anzeigeeinheit 3 erkennbarer Cursor gesteuert werden, wodurch z. B. zusammen mit den Funktionstasten 4 ähnlich wie mit einer Computermaus bei einem Computer gearbeitet werden kann.

Selbstverständlich können auch weitere Funktionen des Mobilgerätes 1 durch die Funktionstasten 4 ausgewählt werden, wie z. B. Öffnen eines Adressbuchs oder Einschalten einer Tastensperre bei einem Mobiltelefon oder Öffnen einer Kalenderfunktionalität bei einem PDA-Organizer.

Die Funktionstasten 4 sind gemäß der einzigen Figur auf der dem Touchpad 2 gegenüber liegenden Seite 8 angeordnet, um bei einer Bedienung des Touchpads 2 mit dem Daumen einfach und leicht mit den anderen Fingern derselben Hand betätigt werden zu können. Die Erfindung ist jedoch nicht auf diese Art der Anordnung beschränkt. Zudem ist auch grundsätzlich denkbar, dass die Informationseingabe ohne jegliche Funktionstasten erfolgt.

Das dargestellte Mobilgerät 1 und das Touchpad 2 sind vorzugsweise derart ausgestaltet, dass die Informationseingabe über das Touchpad 2 mit Hilfe einer Graffiti® -Technik möglich ist. Damit erfolgt die Eingabe von Informationen, indem das Mobilgerät 1 die normale über das Touchpad 2 eingegebene Handschrift der Bedienperson erfasst und auswertet.

## Patentansprüche

1. Mobilgerät
mit einem Gehäuse (6-9),
mit einer in dem Gehäuse (6-9) ausgebildeten Anzeigeeinheit (3), und
mit einem Touchpad (2) zur Eingabe von Informationen mit Hilfe mindestens eines Fingers einer Hand einer Bedienperson, wobei das Touchpad (2) derart an dem Gehäuse (6-9) angeordnet und ausgestaltet ist, dass es mit dem mindestens einen Finger der einen Hand der Bedienperson einfach zu bedienen ist, wenn die Bedienperson mit der einen Hand das Mobilgerät (1) hält.

2. Mobilgerät nach Anspruch 1,
**dadurch gekennzeichnet,**
**dass** das Touchpad (2) als ein Daumen-Touchpad und derart an dem Gehäuse (6-9) angeordnet ist, dass es mit dem Daumen der einen Hand der Bedienperson einfach zu bedienen ist, wenn die Bedienperson mit der einen Hand das Mobilgerät (1) hält.

3. Mobilgerät nach Anspruch 1 oder 2,
**dadurch gekennzeichnet,**
**dass** das Gehäuse eine Vorderseite (6), eine Rückseite (9) und die Vorderseite (6) mit der Rückseite (9) verbindende Seitenflächen (7, 8) umfasst, und
**dass** die Anzeigeeinheit in der Vorderseite (3) des Gehäuses angeordnet ist.

4. Mobilgerät nach Anspruch 3,
**dadurch gekennzeichnet,**
**dass** sich die Anzeigeeinheit (3) im Wesentlichen über die gesamte Vorderseite (6) des Gehäuses erstreckt.

5. Mobilgerät nach Anspruch 4,
**dadurch gekennzeichnet,**
**dass** sich die Anzeigeeinheit (3) mit Ausnahme eines Abschnitts (5), welcher in der Vorderseite (6) des Gehäuses zur Erfassung von akustischen Signalen vorgesehen und angeordnet ist, im Wesentlich über die gesamte Vorderseite (6) des Gehäuses erstreckt.

6. Mobilgerät nach einem der vorhergehenden Ansprüche,
**dadurch gekennzeichnet,**
**dass** das Gehäuse eine Vorderseite (6), eine Rückseite (9) und die Vorderseite (6) mit der Rückseite (9) verbindende Seitenflächen (7,8) umfasst, und
**dass** das Touchpad (2) an einer (7) der Seitenflächen (7,8) des Gehäuses angeordnet ist.

7. Mobilgerät nach einem der vorhergehenden Ansprüche,
**dadurch gekennzeichnet,**
**dass** mit mindestens einem Finger der einen Hand der Bedienperson betätigbare Eingabemittel (4) vorgesehen und derart ausgestaltet und angeordnet sind, dass sie mit dem mindestens einen Finger der einen Hand der Bedienperson einfach zu bedienen sind, wenn die Bedienperson das Mobilgerät (1) mit der einen Hand hält.

8. Mobilgerät nach Anspruch 7,
**dadurch gekennzeichnet,**
**dass** die Eingabemittel (4) mindestens eine Taste umfassen.

9. Mobilgerät nach Anspruch 7 oder 8,
**dadurch gekennzeichnet,**
**dass** die Eingabemittel (4) derart an dem Gehäuse (6-9) angeordnet und ausgestaltet sind, dass sie zumindest mit dem Zeigefinger der einen Hand der Bedienperson einfach zu bedienen sind, wenn die Bedienperson mit der einen Hand das Mobilgerät (1) hält.

10. Mobilgerät nach einem der Ansprüche 7-9,
**dadurch gekennzeichnet,**
**dass** das Mobilgerät (1) derart ausgestaltet ist, dass mit Hilfe der Eingabemittel (4) eine von verschiedenen Funktionsweisen des Touchpads (2) einstellbar ist.

11. Mobilgerät nach Anspruch 10,
**dadurch gekennzeichnet,**
**dass** die über die Eingabemittel (4) einstellbare Funktionsweise des Touchpads (2) ausgewählt ist aus einer Gruppe umfassend eine erste Funktionsweise zur Eingabe von Ziffern über das Touchpad (2), eine zweite Funktionsweise zur Eingabe von Buchstaben über das Touchpad (2), eine dritte Funktionsweise zur Eingabe von Sonderzeichen, eine vierte Funktionsweise zur Eingabe von Freihandzeichnungen über das Touchpad (2) und eine fünfte Funktionsweise zum Ausführen einer Computermaus-ähnlichen Steuerungsfunktion über das Touchpad (2).

12. Mobilgerät nach Anspruch 6 und einem der Ansprüche 7-11,
**dadurch gekennzeichnet,**
**dass** die Eingabemittel (4) an einer (8) der Seitenflächen (7, 8) des Gehäuses angeordnet sind, welche derjenigen Seitenfläche (7), an welcher das Touchpad (2) angeordnet ist, gegenüber liegt.

13. Mobilgerät nach einem der vorhergehenden Ansprüche,
**dadurch gekennzeichnet,**
**dass** das Mobilgerät (1) und das Touchpad (2) derart ausgestaltet sind, dass über das Touchpad (2) die Eingabe der Informationen mit Hilfe einer Graffiti® -Technik möglich ist.

14. Mobilgerät nach einem der vorhergehenden Ansprüche,
**dadurch gekennzeichnet,**
**dass** das Mobilgerät ein Gerät ausgewählt aus einer Gruppe umfassend ein Mobiltelefon (1), ein Web Pad und einen PDA-Organizer ist.
